# EUROPÄISCHE PATENTANMELDUNG

(11) **EP 3 461 629 A1**
(43) Veröffentlichungstag der Anmeldung: **03.04.2019**
(21) Anmeldenummer: 18196938.7
(22) Anmeldetag: 26.09.2018
(51) Int. Cl.: B29D 99/00, B29C 70/30, B29C 70/44, B29C 65/48, B29L 31/30, B29C 65/54, B29L 31/00, B64C 1/12, B29C 70/36, B29C 65/50

(54) **FASERVERBUNDBAUTEIL UND VERFAHREN ZU DESSEN HERSTELLUNG, SOWIE FLÜGELSTRUKTUR**

(30) Priorität: 28.09.2017 DE 102017217339
(71) Anmelder: Airbus Operations GmbH, 21129 Hamburg (DE)
(72) Erfinder: Jung, Manuel, 21129 Hamburg (DE)

(57) **Zusammenfassung**

Die vorliegende Erfindung betrifft ein Faserverbundbauteil (1) mit einem ersten Faserverbundelement (10), welches entlang einer Querachse (X) des Faserverbundbauteils (1) derart gebogen ist, dass es aufeinanderfolgend einen ersten Sockelflansch (11), einen ersten Stegabschnitt (12), einen ersten Kopfflansch (13) und einen ersten Versteifungssteg (14) aufweist, und einem zweiten Faserverbundelement (20), welches entlang der Querachse (X) derart gebogen ist, dass es aufeinanderfolgend einen zweiten Sockelflansch (21), einen zweiten Stegabschnitt (22), einen zweiten Kopfflansch (23) und einen zweiten Versteifungssteg (24) aufweist, wobei der erste Sockelflansch (11) und der erste Kopfflansch (13) parallel zueinander angeordnet sind, der erste Stegabschnitt (12) zu dem ersten Sockelflansch (11) und dem ersten Kopfflansch (13) jeweils abgewinkelt angeordnet ist, der erste Versteifungssteg (14) rechtwinklig zu dem ersten Kopfflansch (13) angeordnet ist, der zweite Sockelflansch (21) und der zweite Kopfflansch (23) parallel zueinander angeordnet sind, der zweite Stegabschnitt (22) zu dem zweiten Sockelflansch (21) und dem zweiten Kopfflansch (23) jeweils abgewinkelt angeordnet ist, der zweite Versteifungssteg (24) rechtwinklig zu dem zweiten Kopfflansch (23) angeordnet ist, und der erste Versteifungssteg (14) und der zweite Versteifungssteg (24) entlang einer Längsachse (Y) des Faserverbundbauteils (1) deckungsgleich zueinander angeordnet und miteinander verbunden sind.

## Beschreibung

Die vorliegende Erfindung betrifft ein Faserverbundbauteil, insbesondere zur Verwendung im Luft- und Raumfahrzeugbau, ein Verfahren zur Herstellung eines derartigen Faserverbundbauteils, und eine Flügelstruktur mit einem derartigen Faserverbundbauteil.

In der Luft- und Raumfahrttechnik ist es üblich, Bauteile für Luft- und Raumfahrzeuge aus Faserverbundmaterialien herzustellen. Derartige Faserverbundbauteile haben vergleichbare Materialeigenschaften wie Bauteile aus massivem Material bei nur einem Bruchteil des Gewichts. Zur weiteren Verbesserung der mechanischen Eigenschaften von schalenförmigen Bauteilen, wie etwa Rumpf- und Flügelschalen, werden zusätzliche Stringer verwendet, welche die Steifigkeit der Schalen in Längsrichtung erhöhen sollen.

Für diese Stringer werden bevorzugt sogenannte Omega-Stringer verwendet, da diese in der Regel eine höhere Steifigkeit aufweisen als die alternativ auch bekannten T-Stringer. Ein derartiger Omega-Stringer, sowie ein Verfahren zu dessen Herstellung, wird zum Beispiel in der DE 10 2008 032 834 B4 beschrieben.

Omega-Stringer weisen eine für Faserverbundbauteile durchaus komplexe Struktur auf und sind dementsprechend komplex in ihrer Fertigung. Vor allem für den Fall, dass eine entlang der Länge des Stringers variierende Steifigkeit erwünscht wird, wie es vor allem bei Flügelstrukturen der Fall ist, sind die Möglichkeiten dies zu realisieren bisher eingeschränkt. Hierzu müssen entweder komplexe Formprozesse der Faserverbundmaterialien durchgeführt werden, oder zusätzliches Faserverbundmaterial vorgesehen werden.

Vor diesem Hintergrund liegt der vorliegenden Erfindung die Aufgabe zugrunde, verbesserte Stringer für den Luft- und Raumfahrzeugbau bereitzustellen, welche auch bei komplexeren Anforderungen an ihre Steifigkeitseigenschaften einfacher herzustellen sind.

Erfindungsgemäß wird diese Aufgabe gelöst durch ein Faserverbundbauteil mit den Merkmalen des Patentanspruchs 1, durch ein Verfahren mit den Merkmalen des Patentanspruchs 9 und durch eine Flügelstruktur mit den Merkmalen des Patentanspruchs 15.

Demgemäß ist ein Faserverbundbauteil vorgesehen. Das Faserverbundbauteil umfasst ein erstes Faserverbundelement, welches entlang einer Querachse des Faserverbundbauteils derart gebogen ist, dass es aufeinanderfolgend einen ersten Sockelflansch, einen ersten Stegabschnitt, einen ersten Kopfflansch und einen ersten Versteifungssteg aufweist, und ein zweites Faserverbundelement, weiches entlang der Querachse derart gebogen ist, dass es aufeinanderfolgend einen zweiten Sockelflansch, einen zweiten Stegabschnitt, einen zweiten Kopfflansch und einen zweiten Versteifungssteg aufweist, wobei der erste Sockelflansch und der erste Kopfflansch parallel zueinander angeordnet sind, der erste Stegabschnitt zu dem ersten Sockelflansch und dem ersten Kopfflansch jeweils abgewinkelt angeordnet ist, der erste Versteifungssteg rechtwinklig zu dem ersten Kopfflansch angeordnet ist, der zweite Sockelflansch und der zweite Kopfflansch parallel zueinander angeordnet sind, der zweite Stegabschnitt zu dem zweiten Sockelflansch und dem zweiten Kopfflansch jeweils abgewinkelt angeordnet ist, der zweite Versteifungssteg rechtwinklig zu dem zweiten Kopfflansch angeordnet ist, und der erste Versteifungssteg und der zweite Versteifungssteg entlang einer Längsachse des Faserverbundbauteils deckungsgleich zueinander angeordnet und miteinander verbunden sind.

Darüber hinaus ist ein Verfahren zur Herstellung eines Faserverbundbauteils vorgesehen. Das Verfahren umfasst ein Formen eines ersten Faserverbundhalbzeugs derart, dass es entlang einer ersten Querachse aufeinanderfolgend einen ersten Sockelflansch, einen ersten Stegabschnitt, einen ersten Kopfflansch und einen ersten Versteifungssteg aufweist, wobei der erste Sockelflansch und der erste Kopfflansch parallel zueinander angeordnet sind, der erste Stegabschnitt zu dem ersten Sockelflansch und dem ersten Kopfflansch jeweils abgewinkelt angeordnet ist, und der erste Versteifungssteg rechtwinklig zu dem ersten Kopfflansch angeordnet ist, ein Formen eines zweiten Faserverbundhalbzeugs derart, dass es entlang einer zweiten Querachse aufeinanderfolgend einen zweiten Sockelflansch, einen zweiten Stegabschnitt, einen zweiten Kopfflansch und einen zweiten Versteifungssteg aufweist, wobei der zweite Sockelflansch und der zweite Kopfflansch parallel zueinander angeordnet sind, der zweite Stegabschnitt zu dem zweiten Sockelflansch und dem zweiten Kopfflansch jeweils abgewinkelt angeordnet ist, und der zweite Versteifungssteg rechtwinklig zu dem zweiten Kopfflansch angeordnet ist, ein Anordnen und Fixieren des ersten Faserverbundhalbzeugs und des zweiten Faserverbundhalbzeugs derart, dass der erste Versteifungssteg und der zweite Versteifungssteg entlang einer gemeinsamen Längsachse deckungsgleich zueinander angeordnet sind, ein Einbringen eines Matrixmaterials in das erste Faserverbundhalbzeug und in das zweite Faserverbundhalbzeug entlang der Faserausrichtungen, und ein Aushärten des Matrixmaterials.

Des Weiteren ist eine Flügelstruktur für ein Luftfahrzeug vorgesehen. Die Flügelstruktur umfasst einen Stringer, welcher ein erfindungsgemäßes Faserverbundbauteil umfasst.

Im Kontext der vorliegenden Erfindung sind die einzelnen Teilabschnitte der Faserverbundelemente in genau der Reihenfolge, in der sie im Text aufgezählt werden zueinander angeordnet und mit ihren jeweiligen Nachbarn verbunden. Sprich, der erste Stegabschnitt befindet sich zwischen dem ersten Sockelflansch und dem ersten Kopfflansch und ist jeweils mit diesen verbunden. Zwischen benachbarten Teilabschnitten können sich eventuell noch zusätzliche optionale Abschnitte befinden, falls sich über diese Abschnitte jeweils eine konsekutive durchgehende Verbindung zwischen den aufgezählten erfindungsgemäßen Teilabschnitten definieren lässt.

Die der vorliegenden Erfindung zugrunde liegende Idee besteht darin, ein ansonsten im Wesentlichen ein Omega-Profil aufweisendes Faserverbundbauteil aus zwei einzelnen Faserverbundelementen zusammenzusetzen. Dies erlaubt die Ausbildung einer kammartigen Struktur mit welcher die Steifigkeit des Faserverbundbauteils eingestellt werden kann. Demnach kann die Steifigkeit des Faserverbundbauteils durch die ursprüngliche Form der einzelnen Faserverbundelemente festgelegt werden. Insbesondere lassen sich die Faserverbundelemente vor ihrer Zusammenfügung entsprechend bearbeiten, was eine vereinfachte Herstellung des Faserverbundbauteils ermöglicht.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung können der erste Versteifungssteg und der zweite Versteifungssteg jeweils eine entlang der Längsachse variierende Breite aufweisen. Dies erlaubt eine Modulation der Steifigkeit des Faserverbundbauteils entlang der Längsachse auf besonders einfache Weise. Darüber hinaus kann das Omega-Profil des Faserverbundbauteils entlang der Längsachse konstant bleiben, was besonders vorteilhaft ist, falls zur zusätzlichen Verstärkung vorgesehen ist, das Faserverbundbauteil mit einem Kern auszufüllen.

Gemäß eines weiteren Ausführungsbeispiels können das erste Faserverbundelement und das zweite Faserverbundelement bezüglich einer sich entlang der Längsachse erstreckenden Mittelebene des Faserverbundbauteils spiegelsymmetrisch zueinander ausgebildet sein. Dies vereinfacht die Herstellung des Faserverbundbauteils, da beide Faserverbundelemente auf identische Weise und mit identischen Mitteln bereitgestellt werden können.

Gemäß einer Weiterbildung können das erste Faserverbundelement und das zweite Faserverbundelement derart geformt sein, dass der erste Stegabschnitt und der zweite Stegabschnitt jeweils eine entlang der Längsachse variierende Breite aufweisen. Dies erlaubt eine platz- und materialsparende Ausgestaltung des Faserverbundbauteils, was besonders für die Verwendung in Flügelstrukturen gewünscht sein kann, da in diesen besondere Einschränkungen an Volumen und Gewicht eines Faserverbundbauteils vorliegen.

Gemäß eines weiteren Ausführungsbeispiels können die Winkel zwischen dem ersten Stegabschnitt und dem ersten Sockelflansch bzw. dem ersten Kopfflansch sowie zwischen dem zweiten Stegabschnitt und dem zweiten Sockelflansch bzw. dem zweiten Kopfflansch jeweils einen Wert zwischen 95° und 115° aufweisen. Dies ermöglicht eine annähernd rechtwinklige Ausgestaltung des Omega-Profils des Faserverbundbauteils, was wiederum einer besonders platzsparenden Ausgestaltungsform des Faserverbundbauteils entspricht.

Gemäß einer Weiterbildung kann das Faserverbundbauteil im Bereich des ersten Versteifungssteges und des zweiten Versteifungssteges ein drittes Faserverbundelement umfassen. Dieses dritte Faserverbundelement dient einer weiteren Erhöhung der Steifigkeit des Faserverbundbauteils. Demnach können das erste und das zweite Faserverbundelement in einer Standardform im Voraus gefertigt werden, unabhängig von der endgültig gewünschten Steifigkeit des Faserverbundbauteils.

Gemäß eines weiteren Ausbildungsbeispiels kann das dritte Faserverbundelement zwischen dem ersten Versteifungssteg und dem zweiten Versteifungssteg angeordnet und jeweils mit diesen verbunden sein. Dies ist eine besonders einfach zu realisierende Weise, das dritte Faserverbundelement in das Faserverbundbauteil zu integrieren.

Gemäß einer Weiterbildung kann das dritte Faserverbundelement eine entlang der Längsachse variierende Dicke aufweisen. Dadurch kann das dritte Faserverbundelement dazu beitragen, die Steifigkeit des Faserverbundbauteils zu modulieren. Ein derartiges, im Wesentlichen krümmungsloses Faserverbundelement ist darüber hinaus einfach mit einer variierenden Dicke herzustellen.

Selbstverständlich können sämtliche Ausgestaltungen des Faserverbundbauteils auch auf das Verfahren zur Herstellung desselben übertragen werden und andersherum.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1a: einen schematischen Querschnitt durch ein Faserverbundbauteil gemäß eines Ausführungsbeispiels der vorliegenden Erfindung;
- Fig. 1b: eine schematische Seitenansicht des Ausführungsbeispiels aus Fig. 1a;
- Fig. 2: eine schematische Seitenansicht eines weiteren Ausführungsbeispiels eines Faserverbundbauteils;
- Fig. 3: eine schematische Seitenansicht eines weiteren Ausführungsbeispiels eines Faserverbundbauteils;
- Fig. 4: einen schematischen Querschnitt durch ein weiteres Ausführungsbeispiel eines Faserverbundbauteils:
- Fig. 5a-c: schematische Darstellungen einiger ausgewählter Schritte eines Verfahrens zur Herstellung eines Faserverbundbauteils;
- Fig. 6: ein schematisches Flussdiagramm eines beispielhaften Verfahrens zur Herstellung eines Faserverbundbauteils.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

In den hier gezeigten Ausführungsbeispielen sind die Faserverbundbauteile und Faserverbundelemente zur einfacheren Darstellung mit größtenteils geraden Teilabschnitten gezeichnet. In der Realität weisen derartige Faserverbundbauteile allerdings, teilweise sehr komplexe, Krümmungen auf. Insofern sind Ausdrücke, welche die einzelnen Teilabschnitte der Faserverbundbauteile und ihre geometrischen Zusammenhänge zueinander in Begriffen definieren, welche für Geraden und Ebenen typisch sind, für den Anwendungsbereich der vorliegenden Erfindung entsprechend breiter auszulegen.

Insbesondere sollte der Begriff "parallel" derart verstanden werden, dass zwei ebene und/oder zumindest abschnittsweise mindestens einfach gekrümmte Flächen fiktiv zumindest bereichsweise gleichmäßig zueinander beabstandet im Raum verlaufen. Als besonders einfaches Beispiel wären etwa die Mantelflächen zweier Zylinder mit parallel verlaufenden Zylinderachsen als "parallel" im Sinne der Anmeldung zu verstehen.

Wenn im Rahmen dieser Anmeldung die Winkel zwischen zwei Teilabschnitten eines Faserverbundbauteils beschrieben werden, sind damit nicht zwangsweise die exakten Winkel an den Verbindungspunkten oder Verbindungsachsen dieser Abschnitte gemeint. Da die Übergänge zwischen einzelnen Teilabschnitten in der Realität oft gekrümmt und fließend sein können, wäre eine derart strenge Auslegung wenig zweckführend. Vielmehr sollen die Winkel zwischen Regressionsebenen, welche die einzelnen Teilabschnitte beschreiben, gemeint sein.

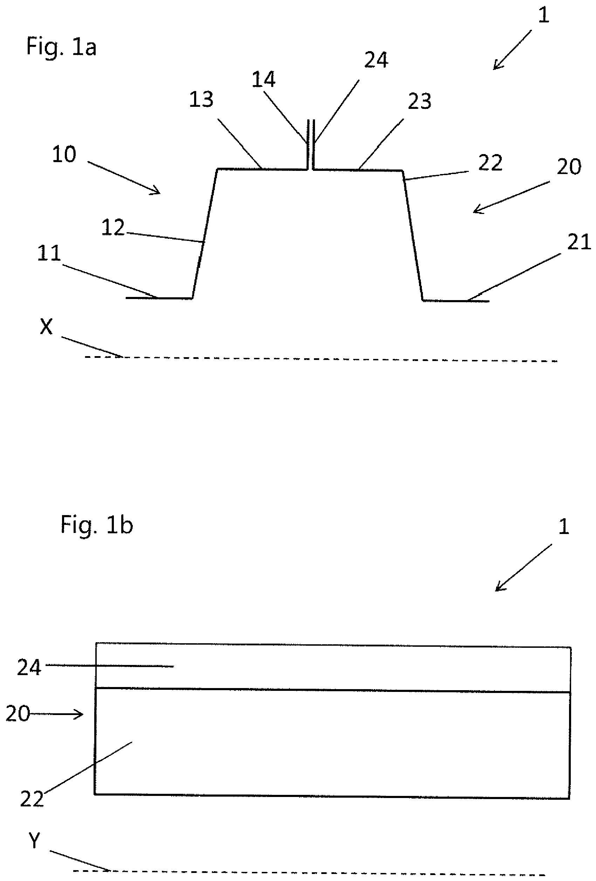

Fig. 1a zeigt einen schematischen Querschnitt durch ein Faserverbundbauteil 1 nach einem Ausführungsbeispiel der vorliegenden Erfindung. Die gestrichelt gezeichnete fiktive Querachse X des Faserverbundbauteils 1 verläuft hierbei horizontal durch die Zeichnung. Das Faserverbundbauteil 1 umfasst ein erstes Faserverbundelement 10 und ein zweites Faserverbundelement 20, welche in diesem Ausführungsbeispiel spiegelsymmetrisch ausgebildet sind. Das erste Faserverbundelement 10 weist von links nach rechts aufeinanderfolgend einen ersten Sockelflansch 11, einen ersten Stegabschnitt 12, einen ersten Kopfflansch 13 und einen ersten Versteifungssteg 14 auf. Das zweite Faserverbundelement 20 weist von rechts nach links aufeinanderfolgend einen zweiten Sockelflansch 21, einen zweiten Stegabschnitt 22, einen zweiten Kopfflansch 23 und einen zweiten Versteifungssteg 24 auf.

Der erste Sockelflansch 11 ist horizontal angeordnet. Das rechte Ende des ersten Sockelflansches 11 ist mit dem linken Ende des ersten Stegabschnittes 12 verbunden. Der Winkel zwischen dem ersten Stegabschnitt 12 und dem ersten Sockelflansch 11 beträgt etwa 100°. Das rechte Ende des ersten Stegabschnitts 12 ist mit dem linken Ende des ersten Kopfflansches 13 verbunden. Der erste Kopfflansch 13 ist horizontal angeordnet. Das rechte Ende des ersten Kopfflansches 13 ist mit dem unteren Ende des ersten Versteifungsstegs 14 verbunden. Der erste Versteifungssteg 14 ist vertikal angeordnet.

Der zweite Sockelflansch 21 ist horizontal angeordnet. Das linke Ende des zweiten Sockelflansches 21 ist mit dem rechten Ende des zweiten Stegabschnittes 22 verbunden. Der Winkel zwischen dem zweiten Sockelflansch 21 und dem zweiten Stegabschnitt 22 beträgt etwa 100°. Das linke Ende des zweiten Stegabschnitts 22 ist mit dem rechten Ende des zweiten Kopfflansches 23 verbunden. Der zweite Kopfflansch 23 ist horizontal angeordnet. Das linke Ende des zweiten Kopfflansches 23 ist mit dem unteren Ende des zweiten Versteifungsstegs 24 verbunden. Der zweite Versteifungssteg 24 ist vertikal angeordnet.

Aus Gründen der deutlichen Darstellung sind der erste Versteifungssteg 14 und der zweite Versteifungssteg 24 beabstandet zueinander dargestellt. In einem realen Faserverbundbauteil 1 wären der erste Versteifungssteg 14 und der zweite Versteifungssteg 24 deckungsgleich miteinander verbunden.

Wie deutlich zu erkennen ist, bilden der erste Sockelflansch 11, der erste Stegabschnitt 12, der erste Kopfflansch 13, der zweite Kopfflansch 23, der zweite Stegabschnitt 22, und der der zweite Sockelflansch 21 ein typische Omega-Profil. Der erste Versteifungssteg 14 und der zweite Versteifungssteg 24 bilden zusammen eine kammartige Struktur, welche das Faserverbundbauteil 1 zusätzlich versteift.

Fig. 1b zeigt eine schematische Seitenansicht des Faserverbundbauteils 1 aus Fig. 1a. In dieser Ansicht ist lediglich das zweite Faserverbundelement 20 sichtbar, insbesondere der zweite Stegabschnitt 22 und der zweite Versteifungssteg 24. Die fiktive Längsachse Y des Faserverbundbauteils verläuft in dieser Ansicht horizontal. Der zweite Versteifungssteg 24 ist über dem zweiten Stegabschnitt 22 angeordnet. Der zweite Stegabschnitt 22 und der zweite Versteifungssteg 24 weisen beide horizontal ausgerichtete rechteckige Seitenprofile auf.

In diesem Fall ist die Steifigkeit des Faserverbundbauteils 1 konstant entlang der Längsachse Y. Dieses Ausführungsbeispiel eines Faserverbundbauteils 1 ist aufgrund seiner einfachen Geometrien besonders einfach herzustellen.

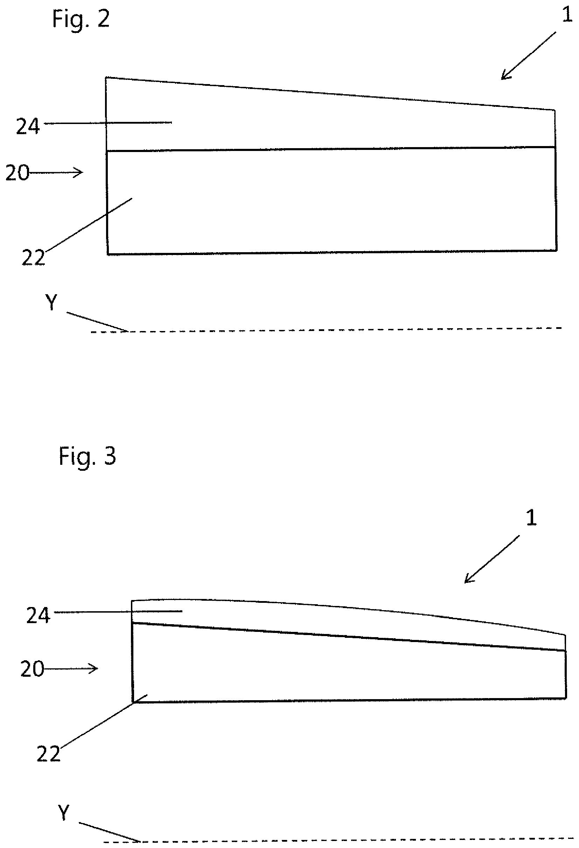

Fig. 2 zeigt eine schematische Seitenansicht eines weiteren Ausführungsbeispiels eines Faserverbundbauteils 1. Das hier gezeigte Ausführungsbeispiel unterscheidet sich von dem in Fig. 1b gezeigten Ausführungsbeispiel dadurch, dass der zweite Versteifungssteg 24 eine sich entlang der Längsachse Y stetig verringernde Breite aufweist. Der zweite Versteifungssteg 24 weist dadurch ein trapezartiges Seitenprofil auf. Die untere Kante des zweiten Versteifungssteges 24 ist weiterhin horizontal angeordnet. Die linke Kante und die rechte Kante des zweiten Versteifungssteges 24 sind parallel zueinander ausgebildet, wobei die rechte Kante kürzer ausgebildet ist als die linke Kante.

In diesem Ausführungsbeispiel nimmt die Steifigkeit des Faserverbundbauteils 1 kontinuierlich von links nach rechts ab. Ein derartiger Steifigkeitsverlauf ist etwa in Flügelstrukturen vorteilhaft, wobei in diesem Fall, der Rumpf des Luftfahrzeugs links angeordnet wäre und die Flügelspitze rechts.

Fig. 3 zeigt eine schematische Seitenansicht eines weiteren Ausführungsbeispiels eines Faserverbundbauteils 1. Dieses Ausführungsbeispiel unterscheidet sich von dem in Fig. 1b gezeigten dadurch, dass der zweite Stegabschnitt 22 eine sich entlang der Längsachse Y stetig verringernde Breite aufweist. Der zweite Stegabschnitt 22 weist dadurch ein trapezartiges Seitenprofil auf. Die untere Kante des zweiten Stegabschnitts 22 ist weiterhin horizontal angeordnet. Die linke Kante und die rechte Kante des zweiten Stegabschnitts sind parallel zueinander ausgebildet, wobei die rechte Kante kürzer ausgebildet ist als die linke Kante. Der zweite Versteifungssteg 24 weist eine entlang der Längsachse Y variierende Breite auf, wodurch die obere Kante des zweiten Versteifungsstegs 24 eine stetige Krümmung aufweist.

Das in Fig. 3 gezeigte Faserverbundbauteil 1 benötigt insgesamt weniger Material als die in Fig. 1b und Fig. 2 gezeigten Ausführungsbeispiele. Darüber hinaus ist die Steifigkeit des Faserverbundbauteils 1 derart moduliert, dass die Steifigkeit sich in der linken Hälfte des Faserverbundbauteils 1 langsamer ändert als in der rechten Hälfte. Ein solcher Steifigkeitsverlauf wäre mit den aus dem Stand der Technik bekannten Methoden nur sehr schwer zu realisieren, ist jedoch durch die Steifigkeitsmodulation durch den ersten Versteifungssteg 14 und den zweiten Versteifungssteg 24 ohne große Probleme umzusetzen.

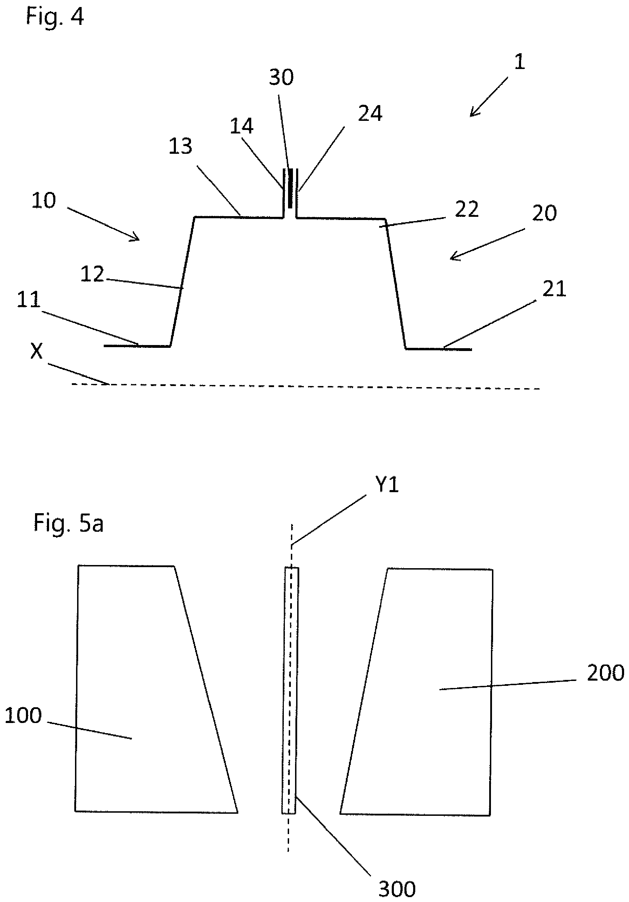

Fig. 4 zeigt einen schematischen Querschnitt durch ein weiteres Ausführungsbeispiel eines Faserverbundbauteils 1. Das hier gezeigte Faserverbundbauteil 1 unterscheidet sich von dem in Fig. 1a gezeigten durch ein drittes Faserverbundelement 30, welches zwischen dem ersten Versteifungssteg 14 und dem zweiten Versteifungssteg 24 angeordnet ist.

Auch hier sind zur deutlicheren Darstellungen Abstände zwischen dem ersten Versteifungssteg 14 und dem dritten Faserverbundelement 30 sowie zwischen dem dritten Faserverbundelement 30 und dem zweiten Versteifungssteg 24 gezeigt. In einem realen Faserverbundbauteil 1 wären diese Bestandteile abstandslos miteinander verbunden.

Das in Fig. 4 gezeigte Faserverbundbauteil 1 weist eine größere Steifigkeit als das in Fig. 1a gezeigte Faserverbundbauteil 1 auf, da das dritte Faserverbundelement 30 das Faserverbundbauteil 1 zusätzlich versteift. Hierdurch lassen sich das erste Faserverbundelement 10 und das zweite Faserverbundelement 20 zum Bilden von Faserverbundbauteilen 1 mit unterschiedlicher Steifigkeit verwenden, indem die Dicke des dritten Faserverbundelements 30 entsprechend gewählt wird. In dieser Querschnittsansicht ist der Verlauf der Dicke des dritten Faserverbundelements 30 entlang der Längsachse Y nicht erkennbar. Das dritte Faserverbundelement 30 kann entlang der Längsachse Y eine konstante Dicke oder eine variierende Dicke aufweisen.

Fig. 5a bis Fig. 5c zeigen ausgewählte Schritte eines beispielhaften Verfahrens zur Herstellung eines Faserverbundbauteils.

Fig. 5a zeigt eine schematische Draufsicht auf einen Ausgangszustand bevor das beispielhafte Verfahren durchgeführt wird. Zu sehen sind ein erstes Faserverbundhalbzeug 100 und ein zweites Faserverbundhalbzeug 200. Das erste Faserverbundhalbzeug 100 und das zweite Faserverbundhalbzeug 200 weisen jeweils einen trapezförmigen Grundriss auf und sind in Bezug auf eine gemeinsame fiktive Längsachse Y1 spiegelsymmetrisch zueinander ausgebildet. Das erste Faserverbundhalbzeug 100 ist hierbei auf der linken Seite angeordnet, wobei die linke Kante des ersten Faserverbundhalbzeuges 100 vertikal ausgerichtet ist und die untere und obere Kante jeweils horizontal. Die obere Kante ist hierbei kürzer als die untere Kante und das erste Faserverbundhalbzeug 100 wird von unten nach oben hin schmaler. Das zweite Faserverbundhalbzeug 200 ist dementsprechend symmetrisch ausgebildet. Ein optionales drittes Faserverbundhalbzeug 300 ist mittig zwischen dem ersten Faserverbundhalbzeug 100 und dem zweiten Faserverbundhalbzeug 200 angeordnet und weist einen rechteckigen Grundriss auf.

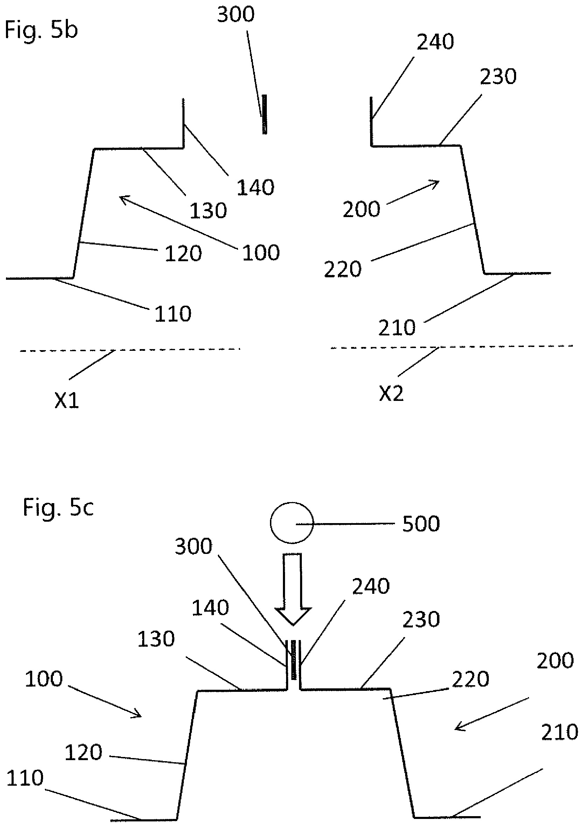

Fig. 5b zeigt eine schematische Querschnittsansicht nach einem Verformen des ersten Faserverbundhalbzeugs 100 und des zweiten Faserverbundhalbzeugs 200. Das erste Faserverbundhalbzeug 100 weist entlang einer ersten fiktiven Querachse X1 von links nach rechts aufeinanderfolgend einen ersten Sockelflansch 110, einen ersten Stegabschnitt 120, einen ersten Kopfflansch 130 und einen ersten Versteifungssteg 140 auf. Das zweite Faserverbundhalbzeug 200 weist entlang einer zweiten fiktiven Querachse X2 von rechts nach links einen zweiten Sockelflansch 210, einen zweiten Stegabschnitt 220, einen zweiten Kopfflansch 230 und einen zweiten Versteifungssteg 240 auf.

Der erste Sockelflansch 110 ist horizontal angeordnet. Das rechte Ende des ersten Sockelflansches 110 ist mit dem linken Ende des ersten Stegabschnittes 120 verbunden. Der Winkel zwischen dem ersten Stegabschnitt 120 und dem ersten Sockelflansch 110 beträgt etwa 100°. Das rechte Ende des ersten Stegabschnitts 120 ist mit dem linken Ende des ersten Kopfflansches 130 verbunden. Der erste Kopfflansch 130 ist horizontal angeordnet. Das rechte Ende des ersten Kopfflansches 130 ist mit dem unteren Ende des ersten Versteifungsstegs 140 verbunden. Der erste Versteifungssteg 140 ist vertikal angeordnet.

Der zweite Sockelflansch 210 ist horizontal angeordnet. Das linke Ende des zweiten Sockelflansches 210 ist mit dem rechten Ende des zweiten Stegabschnittes 220 verbunden. Der Winkel zwischen dem zweiten Sockelflansch 210 und dem zweiten Stegabschnitt 220 beträgt etwa 100°. Das linke Ende des zweiten Stegabschnitts 220 ist mit dem rechten Ende des zweiten Kopfflansches 230 verbunden. Der zweite Kopfflansch 230 ist horizontal angeordnet. Das linke Ende des zweiten Kopfflansches 230 ist mit dem unteren Ende des zweiten Versteifungsstegs 240 verbunden. Der zweite Versteifungssteg 240 ist vertikal angeordnet.

Das optionale dritte Faserverbundhalbzeug 300 ist vertikal ausgerichtet und mittig zwischen dem ersten Versteifungssteg 140 und dem zweiten Versteifungssteg 240 angeordnet.

Fig. 5c zeigt eine schematische Querschnittsansicht eines Einbringens eines Matrixmaterials 500. Das erste Faserverbundhalbzeug 100 und das zweite Faserverbundhalbzeug 200 aus Fig. 5b sind hierbei derart angeordnet, dass der erste Versteifungssteg 140 und der zweite Versteifungssteg 240 jeweils mit dem optionalen dritten Faserverbundhalbzeug 300 verbunden sind. Aus Gründen der Klarheit sind die einzelnen Bestandteile auch hier wieder mit geringen Abständen zueinander dargestellt.

Das Matrixmaterial 500 wird entlang der gezeigten Pfeilrichtung vertikal nach unten in die Faserverbundhalbzeuge eingebracht. Hierbei ist besonders von Vorteil, dass das Matrixmaterial 500 sich rein durch die Schwerkraft entlang der Ausrichtung der Fasern der Faserverbundhalbzeuge ausbreiten kann. Das Einbringen des Matrixmaterials 500 ist dadurch im Vergleich zu Methoden aus dem Stand der Technik, in welchen Matrixmaterial quer zur Ausrichtung der Fasern eingebracht werden muss, begünstigt.

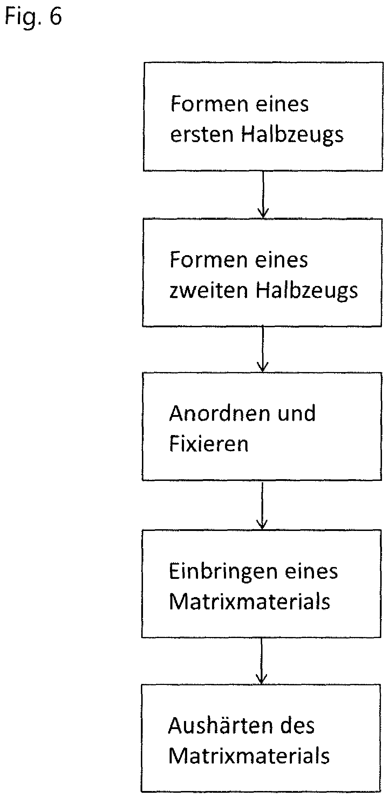

Fig. 6 zeigt ein schematisches Flussdiagramm eines beispielhaften Verfahrens zur Herstellung eines Faserverbundbauteils.

In einem Verfahrensschritt wird hierbei ein erstes Faserverbundhalbzeug 100 derart geformt, dass es entlang einer ersten Querachse X1 aufeinanderfolgend einen ersten Sockelflansch 110, einen ersten Stegabschnitt 120, einen ersten Kopfflansch 130 und einen ersten Versteifungssteg 140 aufweist, wobei der erste Sockelflansch 110 und der erste Kopfflansch 130 parallel zueinander angeordnet sind, der erste Stegabschnitt 120 zu dem ersten Sockelflansch 110 und dem ersten Kopfflansch 130 jeweils abgewinkelt angeordnet ist, und der erste Versteifungssteg 140 rechtwinklig zu dem ersten Kopfflansch 130 angeordnet ist.

In einem darauf folgenden Verfahrensschritt wird ein zweites Faserverbundhalbzeug 200 derart verformt, dass es entlang einer zweiten Querachse X2 aufeinanderfolgend einen zweiten Sockelflansch 210, einen zweiten Stegabschnitt 220, einen zweiten Kopfflansch 230 und einen zweiten Versteifungssteg 240 aufweist, wobei der zweite Sockelflansch 210 und der zweite Kopfflansch 230 parallel zueinander angeordnet sind, der zweite Stegabschnitt 220 zu dem zweiten Sockelflansch 210 und dem zweiten Kopfflansch 230 jeweils abgewinkelt angeordnet ist, und der zweite Versteifungssteg 240 rechtwinklig zu dem zweiten Kopfflansch 230 angeordnet ist.

In einem folgenden Verfahrensschritt werden das erste Faserverbundhalbzeug 100 und das zweite Faserverbundhalbzeug 200 derart angeordnet und fixiert, dass der erste Versteifungssteg 140 und der zweite Versteifungssteg 240 entlang einer gemeinsamen Längsachse Y1 deckungsgleich zueinander angeordnet sind. In diesem Verfahrensschritt kann zugleich ein optionales drittes Faserverbundhalbzeug 300 im Bereich des ersten Versteifungssteges 140 und des zweiten Versteifungssteges angeordnet und fixiert werden.

Darauf folgt ein Verfahrensschritt, in welchem ein Matrixmaterial 500 in das erste Faserverbundhalbzeug 100 und in das zweite Faserverbundhalbzeug 200 entlang der Faserausrichtungen eingebracht wird. Sollte ein optionales drittes Faserverbundhalbzeug 300 vorhanden sein, wird das Matrixmaterial 500 in diesem Schritt auch in das optionale dritte Faserverbundhalbzeug 300 eingebracht.

Hierauf folgt ein weiterer Verfahrensschritt, in welchem das Matrixmaterial 500 ausgehärtet wird.

Zur Durchführung eines derartigen Verfahrens können alle für die Herstellung von Faserverbundhalbzeugen bekannten Hilfsmittel und Vorrichtungen entsprechend verwendet werden. Einem Fachmann sollte hierbei problemlos ersichtlich sein, inwieweit bereits vorhandenen Hilfsmittel und Vorrichtungen eventuell modifiziert werden müssen, dass sie zur Durchführung des hier beschriebenen Verfahrens geeignet sind.

In den Figuren 5a - 5c sowie Fig. 6 wurde eine bestimmte Reihenfolge der einzelnen Verfahrensschritte gezeigt oder zumindest angedeutet. Die vorliegende Erfindung soll sich jedoch in keiner Weise auf lediglich diese eine Abfolge von Verfahrensschritten beschränken. Dem Fachmann ist klar ersichtlich, welche Abfolgen von Verfahrensschritten sinnvoll für die Herstellung eines Faserverbundbauteils sind. Insbesondere können die Verfahrensschritte des Verformens des ersten Faserverbundhalbzeugs 100 und des zweiten Faserverbundhalbzeugs 200 auch in umgekehrter Reihenfolge oder auch gleichzeitig durchgeführt werden. Auch die Verfahrensschritte des Einbringens des Matrixmaterials 500 sowie des Aushärtens des Matrixmaterials 500 können zu beliebigen Zeitpunkten während des Verfahrens stattfinden. So wäre es beispielsweise denkbar, dass das Matrixmaterial 500 vor dem Verformen der Faserverbundhalbzeuge eingebracht wird, nach dem Verformen ausgehärtet wird, und danach die ausgehärteten Faserverbundhalbzeuge miteinander verbunden werden.

Die hier beschriebenen Faserverbundbauteile sind in ihrer Materialzusammensetzung in keiner Weise beschränkt. Bei den verwendeten Fasern kann es sich etwa um Kohlenstofffasern, Aramidfasern, Glasfasern, Keramikfasern, oder alle anderen bekannten Fasern handeln. Als Matrixmaterial können alle gängigen Duromere, Elastomere, thermoplastische Kunststoffe, oder ähnliches vorgesehen sein.

### Bezugszeichenliste

- 1: Faserverbundbauteil
- 10: erstes Faserverbundelement
- 11: erster Sockelflansch
- 12: erster Stegabschnitt
- 13: erster Kopfflansch
- 14: erster Versteifungssteg
- 20: zweites Faserverbundelement
- 21: zweiter Sockelflansch
- 22: zweiter Stegabschnitt
- 23: zweiter Kopfflansch
- 24: zweiter Versteifungssteg
- 30: drittes Faserverbundelement
- 100: erstes Faserverbundhalbzeug
- 110: erster Sockelflansch
- 120: erster Stegabschnitt
- 130: erster Kopfflansch
- 140: erster Versteifungssteg
- 200: zweites Faserverbundhalbzeug
- 210: zweiter Sockelflansch
- 220: zweiter Stegabschnitt
- 230: zweiter Kopfflansch
- 240: zweiter Versteifungssteg
- 300: drittes Faserverbundhalbzeug

- X: Querachse
- Y: Längsachse
- X1: erste Querachse
- X2: zweite Querachse
- Y1: gemeinsame Längsachse

## Patentansprüche

1. Faserverbundbauteil (1), umfassend:
ein erstes Faserverbundelement (10), welches entlang einer Querachse (X) des Faserverbundbauteils (1) derart gebogen ist, dass es aufeinanderfolgend einen ersten Sockelflansch (11), einen ersten Stegabschnitt (12), einen ersten Kopfflansch (13) und einen ersten Versteifungssteg (14) aufweist; und
ein zweites Faserverbundelement (20), welches entlang der Querachse (X) derart gebogen ist, dass es aufeinanderfolgend einen zweiten Sockelflansch (21), einen zweiten Stegabschnitt (22), einen zweiten Kopfflansch (23) und einen zweiten Versteifungssteg (24) aufweist;
wobei der erste Sockelflansch (11) und der erste Kopfflansch (13) parallel zueinander angeordnet sind,
der erste Stegabschnitt (12) zu dem ersten Sockelflansch (11) und dem ersten Kopfflansch (13) jeweils abgewinkelt angeordnet ist,
der erste Versteifungssteg (14) rechtwinklig zu dem ersten Kopfflansch (13) angeordnet ist,
der zweite Sockelflansch (21) und der zweite Kopfflansch (23) parallel zueinander angeordnet sind,
der zweite Stegabschnitt (22) zu dem zweiten Sockelflansch (21) und dem zweiten Kopfflansch (23) jeweils abgewinkelt angeordnet ist,
der zweite Versteifungssteg (24) rechtwinklig zu dem zweiten Kopfflansch (23) angeordnet ist, und
der erste Versteifungssteg (14) und der zweite Versteifungssteg (24) entlang einer Längsachse (Y) des Faserverbundbauteils (1) deckungsgleich zueinander angeordnet und miteinander verbunden sind.

2. Faserverbundbauteil (1) nach Anspruch 1,
wobei der erste Versteifungssteg (14) und der zweite Versteifungssteg (24) jeweils eine entlang der Längsachse (Y) variierende Breite aufweisen.

3. Faserverbundbauteil (1) nach einem der Ansprüche 1 oder 2,
wobei das erste Faserverbundelement (10) und das zweite Faserverbundelement (20) bezüglich einer sich entlang der Längsachse (Y) erstreckenden Mittelebene des Faserverbundbauteils (1) spiegelsymmetrisch zueinander ausgebildet sind.

4. Faserverbundbauteil nach einem der vorhergehenden Ansprüche,
wobei das erste Faserverbundelement (10) und das zweite Faserverbundelement (20) derart geformt sind, dass der erste Stegabschnitt (12) und der zweite Stegabschnitt (22) jeweils eine entlang der Längsachse (Y) variierende Breite aufweisen.

5. Faserverbundbauteil (1) nach einem der vorhergehenden Ansprüche,
wobei die Winkel zwischen dem ersten Stegabschnitt (12) und dem ersten Sockelflansch (11) bzw. dem ersten Kopfflansch (13) sowie zwischen dem zweiten Stegabschnitt (22) und dem zweiten Sockelflansch (21) bzw. dem zweiten Kopfflansch (23) jeweils einen Wert zwischen 95° und 115° aufweisen.

6. Faserverbundbauteil (1) nach einem der vorhergehenden Ansprüche,
wobei das Faserverbundbauteil (1) im Bereich des ersten Versteifungssteges (14) und des zweiten Versteifungssteges (24) ein drittes Faserverbundelement (30) umfasst.

7. Faserverbundbauteil (1) nach Anspruch 6,
wobei das dritte Faserverbundelement (30) zwischen dem ersten Versteifungssteg (14) und dem zweiten Versteifungssteg (24) angeordnet und jeweils mit diesen verbunden ist.

8. Faserverbundbauteil (1) nach einem der Ansprüche 6 oder 7,
wobei das dritte Faserverbundelement (30) eine entlang der Längsachse (Y) variierende Dicke aufweist.

9. Verfahren zur Herstellung eines Faserverbundbauteils (1), wobei das Verfahren die folgenden Schritte umfasst:
Formen eines ersten Faserverbundhalbzeugs (100) derart, dass es entlang einer ersten Querachse (X1) aufeinanderfolgend einen ersten Sockelflansch (110), einen ersten Stegabschnitt (120), einen ersten Kopfflansch (130) und einen ersten Versteifungssteg (140) aufweist, wobei der erste Sockelflansch (110) und der erste Kopfflansch (130) parallel zueinander angeordnet sind, der erste Stegabschnitt (120) zu dem ersten Sockelflansch (110) und dem ersten Kopfflansch (130) jeweils abgewinkelt angeordnet ist, und der erste Versteifungssteg (140) rechtwinklig zu dem ersten Kopfflansch (130) angeordnet ist;
Formen eines zweiten Faserverbundhalbzeugs (200) derart, dass es entlang einer zweiten Querachse (X2) aufeinanderfolgend einen zweiten Sockelflansch (210), einen zweiten Stegabschnitt (220), einen zweiten Kopfflansch (230) und einen zweiten Versteifungssteg (240) aufweist, wobei der zweite Sockelflansch (210) und der zweite Kopfflansch (230) parallel zueinander angeordnet sind, der zweite Stegabschnitt (220) zu dem zweiten Sockelflansch (210) und dem zweiten Kopfflansch (230) jeweils abgewinkelt angeordnet ist, und der zweite Versteifungssteg (240) rechtwinklig zu dem zweiten Kopfflansch (230) angeordnet ist;
Anordnen und Fixieren des ersten Faserverbundhalbzeugs (100) und des zweiten Faserverbundhalbzeugs (200) derart, dass der erste Versteifungssteg (140) und der zweite Versteifungssteg (240) entlang einer gemeinsamen Längsachse (Y1) deckungsgleich zueinander angeordnet sind;
Einbringen eines Matrixmaterials (500) in das erste Faserverbundhalbzeug (100) und in das zweite Faserverbundhalbzeug (200) entlang der Faserausrichtungen; und
Aushärten des Matrixmaterials (500).

10. Verfahren nach Anspruch 9,
wobei der erste Versteifungssteg (140) und der zweite Versteifungssteg (240) jeweils eine entlang der gemeinsamen Längsachse (Y1) variierende Breite aufweisen.

11. Verfahren nach einem der Ansprüche 9 oder 10,
wobei das erste Faserverbundhalbzeug (100) und das zweite Faserverbundhalbzeug (200) mit Bezug auf die gemeinsame Längsachse (Y1) spiegelsymmetrisch zueinander ausgebildet sind.

12. Verfahren nach einem der Ansprüche 9 bis 11,
wobei das erste Faserverbundhalbzeug (100) und das zweite Faserverbundhalbzeug (200) derart geformt werden, dass der erste Stegabschnitt (120) und der zweite Stegabschnitt (220) jeweils eine entlang der gemeinsamen Längsachse (Y1) variierende Breite aufweisen.

13. Verfahren nach einem der Ansprüche 9 bis 12,
wobei der Verfahrensschritt des Anordnens und Fixierens zusätzlich ein Anordnen und Fixieren eines dritten Faserverbundhalbzeugs (300) im Bereich des ersten Versteifungssteges (140) und des zweiten Versteifungssteges (240) umfasst.

14. Verfahren nach Anspruch 13,
wobei das dritte Faserverbundhalbzeug (300) eine entlang der gemeinsamen Längsachse (Y1) variierende Dicke aufweist.

15. Flügelstruktur für ein Luft- oder Raumfahrzeug mit einem Stringer, welcher ein Faserverbundbauteil (1) nach einem der Ansprüche 1 bis 8 aufweist.
